Europäisches Patentamt

European Patent Office

Office européen des brevets

(11) Numéro de publication: **0 435 715 A1**

# (12) DEMANDE DE BREVET EUROPEEN

(21) Numéro de dépôt: 90403437.8

(51) Int. Cl.⁵: **F16K 15/20**

(22) Date de dépôt: 04.12.90

(30) Priorité: **13.12.89 FR 8916455**

(43) Date de publication de la demande:
**03.07.91 Bulletin 91/27**

(84) Etats contractants désignés:
**BE DE ES GB IT LU NL SE**

(71) Demandeur: **HUTCHINSON**
**2 rue Balzac**
**F-75008 Paris(FR)**

(72) Inventeur: **Riquier, Didier**
**9, rue Anatole France**
**F-95340 Persan(FR)**
Inventeur: **Lelievre, Alain**
**37ter, rue de Lamberval, Fresnoy en Thelle**
**F-60121 Le Mesnil en Thelle(FR)**

(74) Mandataire: **Orès, Bernard et al**
**Cabinet ORES 6, Avenue de Messine**
**F-75008 Paris(FR)**

(54) Dispositif pour la commande de l'échappement d'une enceinte sous pression.

(57) Le dispositif comprend un poussoir d'actionnement (26) d'un doigt (30) propre à coopérer avec la tige (T) de dégonflage de la valve, ledit poussoir étant monté dans un manchon (40) dont il peut être rendu solidaire par l'intermédiaire d'un accouplement à billes (38) escamotable, le manchon (40) étant lui-même monté à coulissement dans un carter (10) qui ménage une chambre (16) concentrique au droit d'actionnement de la tige de dégonflage (30) et qui est percé de trous évents (18) d'échappement du fluide gazeux contenu dans l'enceinte à dégonfler (E), lesdits trous évents (18) étant ménagés dans la paroi latérale (17) du carter qui limite ladite chambre (16).

FIG.2

# DISPOSITIF POUR LA COMMANDE DE L'ECHAPPEMENT D'UNE ENCEINTE SOUS PRESSION

L'invention a pour objet un dispositif pour la commande de l'échappement d'une enceinte sous pression et vise en particulier, mais sans que cette indication ait quelque caractère limitatif que ce soit, un dispositif propre à être rapporté sur la valve d'une roue de pneumatique pour provoquer d'une façon automatique le dégonflement de ce dernier jusqu'à une valeur de pression prédéterminée.

On sait que pour modifier les conditions d'adhérence et de mobilité de véhicules, aussi bien civils que militaires, la pression de gonflage des pneumatiques du véhicule, peut avoir à être abaissée, par exemple pour le franchissement de terrains sableux, boueux ou analogues. La baisse de pression de gonflage des pneumatiques doit généralement être effectuée rapidement, d'une part, et jusqu'à une valeur bien déterminée, d'autre part. Aussi a-t-on déjà proposé, pour ce faire, des systèmes de réglage de la pression des pneus commandés à partir de l'habitacle du véhicule ; de tels systèmes sont cependant extrêmement onéreux et, de ce fait, d'application limitée. Pour pallier cet inconvénient des dispositifs actionnables à la main ont été réalisés et certains d'entre eux sont décrits dans US-A-4 076 037 ou DE-2 639 571. Ces dispositifs, cependant, ne sont pas entièrement satisfaisants dans la mesure où leur fonctionnement est automatique, d'une part, et ne procurent pas toujours un dégonflage rapide, comme cela est parfois requis dans des conditions d'urgence, d'autre part.

C'est dans ces conditions que la Demanderesse s'est interrogée sur la possibilité de fournir un dispositif simple, manoeuvrable à la main, bien adapté à la commande d'un dégonflage rapide, sûr, et dans des conditions quantitativement reproductibles, de pneumatiques de véhicules.

Le problème posé a été résolu, selon l'invention, dans un dispositif permettant de commander l'échappement d'une enceinte pneumatique sous pression, notamment propre à commander le dégonflage d'un pneumatique rapidement et jusqu'à une valeur de pression prédéterminée après avoir été rapporté sur une valve équipant l'enceinte, par le fait que le dispositif comprend un poussoir d'actionnement d'un doigt propre à coopérer avec la tige de dégonflage de la valve, ledit poussoir étant monté dans un manchon dont il peut être rendu solidaire par l'intermédiaire d'un accouplement à billes escamotables, le manchon étant lui-même monté à coulissement dans un carter qui ménage une chambre coaxiale au doigt d'actionnement de la tige de dégonflage et qui est percée de trous évents d'échappement du fluide gazeux contenu dans l'enceinte à dégonfler, ménagés dans la paroi latérale du carter qui limite ladite chambre.

Dans une forme de réalisation préférée, le poussoir agit sur le doigt de commande de la tige de dégonflage avec interposition d'un ressort propre à compenser les différences de cotes de fabrication de l'obus de valve.

Dans une réalisation préférée, la chambre dans la paroi latérale de laquelle sont ménagés les trous évents est limitée à étanchéité par un joint torique solidaire du manchon et un ressort taré est disposé entre le manchon et le fond d'une douille montée dans le carter à l'arrière de celui-ci.

L'invention sera bien comprise par la description qui suit, faite à titre d'exemple et en référence au dessin annexé dans lequel :

- la figure 1 est une vue en coupe longitudinale d'un dispositif selon l'invention pour une première condition de repos ;

- la figure 2 est une vue analogue, mais pour une autre condition de fonctionnement.

L'invention est illustrée dans ce qui suit comme appliquée à un dispositif réalisé en tant que dispositif de dégonflage rapide d'un pneumatique de véhicule automobile.

Pour une telle application, le dispositif 10 comprend un corps de forme générale cylindrique, d'axe 11, avec une tête 12 et un carter 13. La tête 12 est percée d'un alésage taraudé 13' pour le montage, par vissage, sur le chapeau C d'une valve (non représentée) et dont la tige de dégonflage est montrée schématiquement en T. L'alésage 13' se poursuit à l'opposé de la face antérieure 14 de la tête 12, par un lamage 15, d'abord cylindrique puis tronconique, dans une chambre 16. La paroi latérale de cette dernière, 17, est formée par une partie cylindrique du carter 13 et dans cette paroi latérale 17 sont ménagés des trous évents 18 dont le nombre et le calibrage sont choisis pour introduire une perte de charge de valeur prédéterminée lorsque la chambre 16, -ainsi qu'il sera explicité ci-après-, est en communication avec l'enceinte dont on cherche à commander l'échappement, et qui est montrée très schématiquement en E.

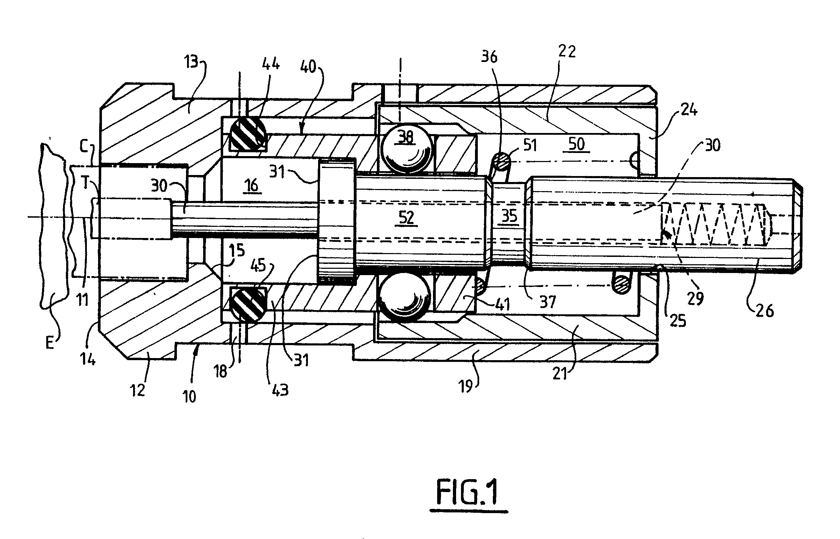

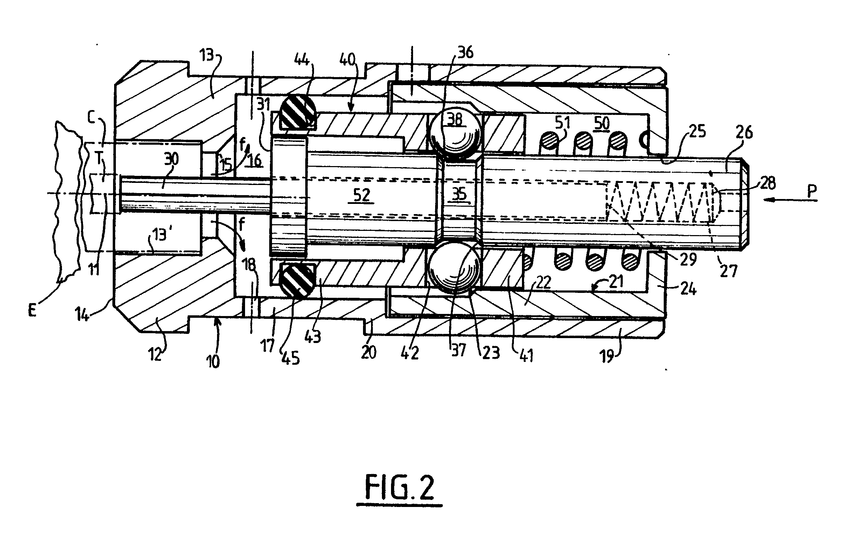

Dans la partie 19 du carter 13, séparée de l'enveloppe 17 par un épaulement 20, est montée une douille 21 dont la partie antérieure 22, la plus proche de l'épaulement 20, est d'épaisseur légèrement inférieure au reste de la douille auquel elle est reliée par une surface tronconique 23. A son extrémité postérieure, la douille 21 est fermée par une paroi 24 percée d'un orifice 25 qui livre passage à coulissement à un poussoir 26. Celui-ci est percé d'un forage 27 dans lequel est logé un ressort 28 qui prend appui sur la face d'extrémité 29 d'un doigt 30, ou percuteur, dont la longueur est telle qu'il fait saillie par rapport à la face frontale antérieure 31 du poussoir 26 d'une part, et qui est propre à coopérer avec la tige de dégonflage T de la valve à chapeau C, d'autre part, lorsqu'il est déplacé d'une longueur suffisante à partir de sa condition de repos, montrée sur la figure 1, jusqu'à sa condition opératoire, montrée sur la figure 2. Le poussoir 26 qui présente une face frontale 31 de plus grand diamètre que le reste de son corps, présente également, sensiblement dans sa partie médiane, une zone 35 de plus petit diamètre reliée à la partie antérieure du poussoir par une portée tronconique 36 et à la partie postérieure du poussoir par une portée tronconique 37. Cette zone de plus petit diamètre, ou étranglement 35, est destinée à loger, en partie, quatre billes 38 formant un dispositif d'accouplement escamotable entre le poussoir 26 et un manchon 40, monté à coulissement dans le carter 10. Comme bien visible sur les figures 1 et 2, le manchon 40 comprend une partie postérieure 41 percée de logements 42 de réception des billes 38 et une partie antérieure 43 de plus faible épaisseur que celle de la partie 41 munie au voisinage de son extrémité avant d'une gorge 44 de réception d'une bague formant joint d'étanchéité, 45.

Dans l'espace 50, ménagé entre la paroi 24 et la face postérieure de la partie 41 du manchon 40, est logé un ressort hélicoïdal taré 51 qui entoure le poussoir 26.

Le fonctionnement du dispositif est le suivant:

Dans la condition initiale, montrée sur la figure 1, le dispositif est inopératoire. La tige ou percuteur 30 est à distance de la tige de dégonflage T de la valve de l'enceinte E sur laquelle le dispositif a été rapporté. Les billes 38 dans les logements 42 sont en contact avec la surface cylindrique du poussoir 26 dans la partie 52 de celui-ci adjacente à la partie portant la face antérieure et le ressort 51 est non comprimé.

Pour provoquer l'échappement, par exemple le dégonflage des pneus après que le dispositif ait été rapporté sur une valve de pneumatique de roue de véhicule automobile, l'utilisateur provoque l'enfoncement du poussoir 26 à l'intérieur de la douille 21, par poussée sur celui-ci dans le sens de la flèche P. Cette poussée, transmise par le ressort 28 à la tige ou percuteur 30, provoque le déplacement de ladite tige 30 dans la direction de la flèche P. Au cours de ce déplacement, la zone étranglée 35 se présente au droit des billes 38 qui, pénétrant dans la partie comprise entre les deux portées 36 et 37, solidarisent mécaniquement le poussoir 26 et le manchon 40. Lorsque la tige ou percuteur 30 vient au contact de la tige de dégonflage 31 de la valve, elle repousse cette dernière qui entraîne l'obus de valve pour livrer passage au fluide contenu dans l'enceinte, comme montré par les flèches f. L'échappement qui se produit par les passages évents 18 fait décroître progressivement la pression dans la chambre 16 et, lorsque cette pression atteint celle correspondant à la valeur de tare du ressort 51, l'ensemble de l'équipage mobile constitué par le manchon 40 et le poussoir 26 repart dans la direction inverse de celle montrée par la flèche P, libérant la tige T de la soupape et interrompant le dégonflage de l'enceinte.

Le fonctionnement du dispositif selon l'invention est ainsi rapide et sûr, d'une part, et fournit des résultats quantitativement reproductibles, d'autre part.

## Revendications

1. Dispositif pour la commande de l'échappement d'une enceinte pneumatique sous pression, notamment pour la commande du dégonflage d'un pneumatique rapidement et jusqu'à une valeur de pression prédéterminée après qu'il ait été rapporté sur une valve équipant l'enceinte, caractérisé en ce qu'il comprend un poussoir d'actionnement (26) d'un doigt (30) propre à coopérer avec la tige (T) de dégonflage de la valve, ledit poussoir étant monté dans un manchon (40) dont il peut être rendu solidaire par l'intermédiaire d'un accouplement à billes (38) escamotables, le manchon (40) étant lui-même monté à coulissement dans un carter (13) qui ménage une chambre (16) coaxiale au doigt d'actionnement de la tige de dégonflage (30) et qui est percé de trous évents (18) d'échappement du fluide gazeux contenu dans l'enceinte à dégonfler (E), lesdits trous évents (18) étant ménagés dans la paroi latérale (17) du carter (13) qui limite ladite chambre (16).

2. Dispositif selon la revendication 1, caractérisé en ce que le poussoir (26) agit sur le doigt de commande (30) de la tige de dégonflage (T) avec interposition d'un ressort (28) propre à compenser les différences de cotes de fabrication de l'obus de valve.

3. Dispositif selon l'une quelconque des revendications précédentes, caractérisé en ce que la chambre (16) dans la paroi latérale de laquelle (17) sont ménagés les trous évents (18) est limitée à étanchéité par un joint torique (45) solidaire du manchon (40).

4. Dispositif selon l'une quelconque des revendications précédentes, caractérisé en ce qu'il comprend un ressort taré (51) disposé entre le manchon (40) et le fond (24) d'une douille (21) montée dans le carter (13) à l'arrière de celui-ci.

FIG.1

4

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 361 837 (VANNI)<br>* revendication 1; figure 2 * <br>— — — | 1 | F 16 K<br>15/20 |
| D,A | US-A-4 076 037 (PEREZ)<br>* abrégé *<br>— — — | 1 | |
| A | US-A-3 802 459 (GERAUDIE)<br>* figure 1 *<br>— — — | 1 | |
| A | US-A-3 033 512 (LIESER)<br>* figure 1 *<br>— — — | 2-4 | |
| D,A | DE-A-2 639 571 (EATON CORP)<br>* le document en entier *<br>— — — — — | | |

**DOMAINES TECHNIQUES RECHERCHES (Int. Cl.5)**

F 16 K
B 60 C

Le présent rapport de recherche a été établi pour toutes les revendications

| Lieu de la recherche | Date d'achèvement de la recherche | Examinateur |
|---|---|---|
| Berlin | 08 avril 91 | SCHLABBACH M |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant